# EUROPÄISCHE PATENTSCHRIFT

(11) **EP 1 151 563 B1**
(45) Veröffentlichungstag und Bekanntmachung des Hinweises auf die Patenterteilung: **15.08.2007**
(21) Anmeldenummer: 99964441.2
(22) Anmeldetag: 21.12.1999
(51) Int. Cl.: H04H 1/00

(54) **VERFAHREN UND EMPFÄNGER ZUM EMPFANG EINES RUNDFUNKSIGNALS MIT VERSCHLÜSSELTEN INHALTEN**
METHOD AND RECEIVER FOR RECEIVING A BROADCAST SIGNAL HAVING ENCODED CONTENTS
PROCEDE ET RECEPTEUR POUR LA RECEPTION D'UN SIGNAL RADIO A CONTENUS CODES

(30) Priorität: 11.02.1999 DE 19905628
(43) Veröffentlichungstag der Anmeldung: 07.11.2001
(73) Patentinhaber: ROBERT BOSCH GMBH, 70442 Stuttgart (DE)
(72) Erfinder: HERRMANN, Matthias, D-31141 Hildesheim (DE)
(86) Internationale Anmeldenummer: PCT/DE1999/004045
(87) Internationale Veröffentlichungsnummer: WO 2000/048350

(56) Entgegenhaltungen:
- EP-A- 0 804 012
- GB-A- 2 286 751
- GB-A- 2 309 566
- US-A- 4 991 207

## Beschreibung

### Technisches Gebiet

Die Erfindung betrifft einen Empfänger für ein Rundfunksignal, insbesondere ein Autoradio oder Radiophone, gemäß dem Oberbegriff des Anspruchs 1. Die Erfindung betrifft ferner ein Verfahren zum Empfang eines Rundfunksignals, gemäß dem Oberbegriff des Anspruchs 11.

### Stand der Technik

Herkömmliche Rundfunkübertragungen sind frei empfangbar und deren Nutzung ist durch die Zahlung entsprechender Abgaben, in Deutschland beispielsweise an die GEMA, abgegolten. Häufig werden jedoch über diese herkömmlichen Rundfunksendungen hinausgehende Angebote und Programminhalte gewünscht, welche nur durch eine zusätzliche Kostenpflicht für den Nutzer realisierbar sind. Derartige Angebote werden beispielsweise von Anbietern verschlüsselt über herkömmliche Rundfunkübertragungskanäle verbreitet, wobei zwar jeder das Signal empfangen kann, jedoch die darin enthaltenen Information einem Nutzer nur dann zugänglich gemacht werden, wenn er ein entsprechendes Nutzungsentgelt bezahlt hat. Hierzu erhält ein zahlender Kunde eine Dekodiervorrichtung, welche in den Signalweg zwischen Antenne und Empfänger einzuschleifen ist und welche die verschlüsselt übertragenen Informationen entschlüsselt. Nachteilig ist hierbei jedoch, dass für jeden Anbieter eine eigene, anbieterspezifische Dekodiervorrichtung erforderlich ist. Möchte ein Kunde derartige verschlüsselte Angebote nutzen muss er also zuerst eine Dekodiervorrichtung erhalten und diese meist selbst anschließen. Dies wird jedoch als unpraktisch empfunden und hält viele potentielle Kunden von einer Nutzung verschlüsselter Angebote ab. Ferner ist die zusätzlich erforderliche Hardwareerweiterung auf Seiten des Nutzer kostenintensiv.

EP-A-0 804 012 offenbart eine Multimedia-, z.B. DAB-, Rundfunkempfänger, zum Empfang von verschlüsselten Rundfunksignalen, der diese mittels einer Autorisierung oder eines Schlüssels entschlüsseln kann. Der Schlüssel wird über einen separaten Übertragungskanal, nämlich GSM oder UMTS übertragen und mittels eines Mobilfunktelefons empfangen. Somit kann der Schlüssel solchen Nutzern vorbehalten bleiben, die eine Gebühr zum Empfang der gewünschten Programme entrichtet haben.

Darstellung der Erfindung, Aufgabe, Lösung, Vorteile

Es ist Aufgabe der vorliegenden Erfindung, im Bereich von Rundfunkübertragungen zusätzliche kostenpflichtige Angebote auf einfache Weise zur Verfügung stellen zu können.

Diese Aufgabe wird durch einen Empfänger der o.g. Art mit den in Anspruch 1 gekennzeichneten Merkmalen und durch ein Verfahren der o.g. Art mit den in Anspruch 11 gekennzeichneten Merkmalen gelöst.

Dazu ist bei einem Empfänger der o.g. Art erfindungsgemäß ein Signaldekoder vorgesehen, welcher ein in dem Rundfunksignal verschlüsselt enthaltenes Audiosignal und/oder ein in dem Rundfunksignal verschlüsselt enthaltenes Datensignal entschlüsselt, wobei der Signaldekoder derart ausgebildet ist, dass eine Entschlüsselung des verschlüsselten Signals lediglich dann erfolgt, wenn der Signaldekoder ein über einen von einem Übertragungsweg des Rundfunksignals verschiedenen, externen Übertragungsweg empfangenes, externes Authentisierungssignal erhält.

Dies hat den Vorteil, dass der Signaldekoder fernsteuerbar ist, ohne die Notwendigkeit zusätzlicher, für jeden Kunden individuell vorzusehender Authentisierungshardware. Somit ist eine gezielte und kontrollierte Freigabe von über einen Rundfunkempfänger übertragenen Informationen, beispielsweise gegen Gebühren, mit einem standardisierten Empfänger möglich. Lediglich der Datenzulieferer muss für die ferngesteuerte Freigabe des Signaldekoders sorge tragen. Der Benutzer muss zur Authentisierung keinerlei Veränderungen an seinem Gerät vornehmen. Es ist auch keine zuliefererspezifische Hardware notwendig, so dass mit einem einzigen Gerät Angebote unterschiedlicher Zulieferer nutzbar sind.

Vorzugsweise Weitergestaltungen des Empfängers sind in den Ansprüchen 2 bis 10 beschrieben.

Zum Verbreiten von individuellen Authentisierungen umfasst in besonders bevorzugter Weise der externe Übertragungsweg ein Mobilfunkgerät, insbesondere nach den GSM-Standard, welches über eine Kommunikationsverbindung, insbesondere über eine Draht-, Infrarot- oder Funkschnittstelle, mit dem Empfänger verbunden ist, wobei das Mobilfunkgerät das Authentisierungssignal empfängt und an den Empfänger über die Kommunikationsverbindung weiter gibt.

Ein einheitliches Gerät, wie beispielsweise ein Radiophone, steht dadurch zur Verfügung, dass das Mobilfunkgerät und der Empfänger in einem gemeinsamen Gehäuse angeordnet sind.

In einer bevorzugten Ausführungsform ist eine Steuereinheit, insbesondere in Form eines Prozessors vorgesehen, welche den Signaldekoder und weitere vorbestimmte Komponenten des Empfängers über einen Steuerbus ansteuert, wobei eine Kommunikationsverbindung, insbesondere eine Draht-, Infrarot- oder Funkschnittstelle, zwischen der Steuereinheit und dem externen Übertragungsweg vorgesehen ist, wobei die Steuereinheit das Authentisierungssignal an den Signaldekoder überträgt, wenn die Steuereinheit das Authentisierungssignal von dem externen Übertragungsweg erhält.

Zur Eingabe von Daten und Befehlen durch einen Benutzer ist zweckmäßigerweise eine mit der Steuereinheit verbundene Eingabeeinrichtung vorgesehen.

In einer bevorzugten Ausführungsform sind ein Empfangsteil, welches aus dem Rundfunksignal ein Basisbandsignal demoduliert, und eine nachgeschaltete Audiosignalverarbeitungseinheit vorgesehen, wobei der Signaldekoder in einem Signalweg zwischen dem Empfangsteil und der Audiosignalverarbeitungseinheit angeordnet ist.

Zum wahlweisen Entschlüssen oder nicht Entschlüsseln eines mit dem Rundfunksignal übertragenen Audiosignals weist der Signaldekoder einen Multiplexer, einen ersten durchgeschleiften Signalweg, auf dem keine Entschlüsselung erfolgt, und einen zweiten Signalweg mit einem Audiodekoder auf, wobei der erste und zweite Signalweg mit dem vom Audiodekoder gesteuerten Multiplexer verbunden sind. Hierbei ist ein Ausgang des Multiplexers mit der Audiosignalverarbeitungseinheit verbunden.

Zum wahlweise Entschlüssen oder nicht Entschlüsseln eines mit dem Rundfunksignal übertragenen Datensignals weist der Signaldekoder einen dritten Signalweg mit einem Datendekoder auf. Hierbei ist ein Ausgang des Datendekoders mit der Steuereinheit verbunden.

Bei einem Verfahren der o.g. Art ist es erfindungsgemäß vorgesehen, dass ein in dem Rundfunksignal verschlüsselt enthaltenes Audiosignal und/oder ein in dem Rundfunksignal verschlüsselt enthaltenes Datensignal entschlüsselt wird, wenn ein externes Authentisierungssignal über einen vom Übertragungsweg des Rundfunksignals verschiedenen, externen Übertragungsweg empfangen wird.

Dies hat den Vorteil, dass ein zur Verfügung stellen von kostenpflichtigen Angeboten fernsteuerbar ist, ohne die Notwendigkeit zusätzlicher, für jeden Kunden individuell vorzusehender Authentisierungshardware. Somit ist eine gezielte und kontrollierte Freigabe von über einen Rundfunkempfänger übertragenen Informationen, beispielsweise gegen Gebühren, mit einem standardisierten Empfänger möglich. Lediglich der Zulieferer des verschlüsselten Daten- bzw. Audiosignals muss für die ferngesteuerte Freigabe eines Signaldekoders sorge tragen. Der Benutzer muss zur Authentisierung keinerlei Veränderungen an seinem Gerät vornehmen. Es ist auch keine zuliefererspezifische Hardware notwendig, so dass mit einem einzigen Gerät Angebote unterschiedlicher Zulieferer nutzbar sind.

Vorteilhafte Weiterbildungen des Verfahrens sind in den Ansprüchen 12 und 13 beschrieben.

Zum Verbreiten von individuellen Authentisierungen wird das Authentisierungssignal über ein Mobilfunknetz an ein mit dem Empfänger über eine Kommunikationsschnittstelle, insbesondere über eine Draht-, Infrarot- oder Funkschnittstelle, verbundenes Mobilfunkgerät übertragen.

Zweckmäßigerweise wird über den externen Übertragungsweg ein Empfänger für den Übertragungsweg des Rundfunksignals gesteuert.

### Kurze Beschreibung der Zeichnungen

Nachstehend wird die Erfindung anhand der beigefügten Zeichnung näher erläutert. Diese zeigt in der einzigen Fig. eine bevorzugte Ausführungsform eines erfindungsgemäßen Empfängers.

### Bester Weg zur Ausführung der Erfindung

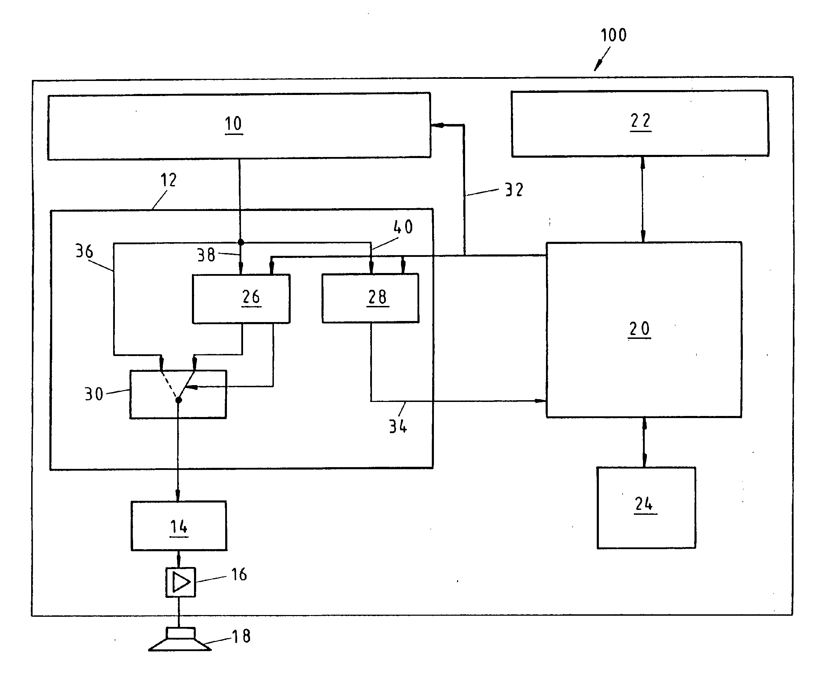

Die in Figur 1 dargestellte bevorzugte Ausführungsform eines erfindungsgemäßen Empfängers 100 umfasst ein AM/FM-Empfangsteil 10, einen Signaldekoder 12, eine Audiosignalverarbeitungseinheit 14, eine Audioendstufe 16, Lautsprecher 18, eine Steuereinheit 20, ein Mobilfunkteil 22 (GSM = Global System for Mobile Communication) und eine Aus- und Eingabevorrichtung 24. Der Signaldekoder 12 umfasst einen Audiodekoder 26, einen Datendekoder 28 und einen Multiplexer 30. Die Steuereinheit 20 steuert das AM/FM-Empfangsteil 10, den Audiodekoder 26 und den Datendekoder 28 über einen Steuerbus 32. Der Datendekoder 28 weist einen mit der Steuereinheit 20 verbundenen Datenausgang 34 auf, über den Steuer- und Nutzdaten an die Steuereinheit 20 übertragen werden.

Ein vom AM/FM-Empfangsteil 10 kommendes, demoduliertes Basisbandsignal führt auf den Signaldekoder 12, welcher drei Signalzweige 36, 38 und 40 aufweist. Der erste Signalzweig 36 lässt das Audiosignal unbeeinflusst passieren, der zweite Signalzweig 38 führt eine Entschlüsselung des zuvor senderseitig verschlüsselten Audiosignals aus, der dritte Signalzweig 40 entschlüsselt einen Datenstrom, der in der Steuereinheit 20, beispielsweise einem Prozessor, weiterverarbeitet wird. Die beiden Audiosignale der jeweiligen Signalzweige 36, 38 gelangen über den Multiplexer 30 in den Block Audiosignalverarbeitung 14, welcher konventionelle Funktionen, wie beispielsweise Klang-, Volumen-, Balance- oder Fadersteuerung durchführt. Welcher der Signalzweige 36 oder 38 am Signaldekoder 12 gerade aktiv ist, hängt von den über den Steuerbus 32 übertragenen Steuerdaten ab.

Der Mobilfunkteil 22 kommuniziert mit der Eingabevorrichtung 24, welche auch als MMI (Man Machine Interface) bezeichnet wird, über die Steuereinheit 20. Letztere wertet u.a. den aus dem Mobilfunkteil 22 kommenden Datenstrom aus und selektiert entsprechende Daten für die Steuerung des Signaldekoders 12 und, sofern vorhanden, des AM/FM-Empfangsteiles 10. Wenn also der Mobilfunkteil 22 ein entsprechendes Authentisierungssignal erhält, dann gibt die Steuereinheit 20 ein entsprechendes Authentisierungssignal über den Signalbus 32 zum Aktivieren des Audiodekoders 26 und/oder des Datendekoders 28 weiter.

Somit ist erfindungsgemäß im Zweig des demodulierten Basisbandes eines ersten Übertragungsweges, hier der AM/FM-Empfänger 10, der Signaldekoder 12 hinzugefügt, wobei ferngesteuert über einen zweiten Übertragungsweg, hier ein Mobilfunknetz, eine Sperrung oder Entschlüsselung bestimmter Signale oder Daten im Basisbandsignal des AM/FM-Empfängers erfolgt. Darüber hinaus wird optional über den zweiten Übertragungsweg (Mobilfunknetz) auch der AM/FM-Empfänger 10, beispielsweise zur Auswahl eines Kanals, ferngesteuert. Es ist senderseitig im Übertragungsweg des AM/FM-Empfängers 10 eine entsprechende Verschlüsselung vorgesehen. Ferner besteht eine Kommunikation zwischen Rundfunk- und Mobilfunknetz.

In einer besonders bevorzugten Ausführungsform ist erfindungsgemäß eine Kombination aus Autoradio und Mobilfunkgerät in einem 1-DIN-Einbaugehäuse vorgesehen, welches mit der oben erläuterten Erfindung erweitert ist. Es ist jedoch auch eine beliebig geartete Kombination aus AM/FM-Empfangsteil 10 und Mobilfunkgerät 22 möglich, welche nicht notwendigerweise in einem Gehäuse integriert sein muss. Beispielsweise kommuniziert ein sogn. Handy über eine Draht-, Infrarot- oder Funkschnittstelle mit einem Autoradiogerät.

## Patentansprüche

1. Empfänger (100) für ein Rundfunksignal, mit einem Signaldekoder (12), der ein in dem Rundfunksignal verschlüsselt enthaltenes Audiosignal und/oder ein in dem Rundfunksignal verschlüsselt enthaltenes Datensignal entschlüsselt, wobei der Signaldekoder (12) derart .. ausgebildet ist, dass eine Entschlüsselung des verschlüsselten Signals nur dann erfolgt, wenn der Signaldekoder (12) ein über einen von einem Übertragungsweg des Rundfunksignals verschiedenen, externen Übertragungsweg empfangenes, externes Authentisierungssignals erhält, **dadurch gekennzeichnet, dass** der Empfänger (100) oder einzelne seiner Komponenten zusätzlich mittels eines über den externen Übertragungsweg übertragbaren Steuersignals steuerbar ist oder sind.

2. Empfänger (100) nach Anspruch 1, **dadurch gekennzeichnet, dass** der externe Übertragungsweg ein Mobilfunkgerät (22), insbesondere nach dem GSM/UMTS-Standard, umfaßt, welches über eine Kommunikationsverbindung, insbesondere über eine Draht-, Funk- oder Infrarotschnittstelle, mit dem Empfänger (100) verbunden ist, wobei das Mobilfunkgerät (22) das Authentisierungssignal empfängt und an den Empfänger (100) über die Kommunikationsverbindung weitergibt.

3. Empfänger (100) nach Anspruch 2, **dadurch gekennzeichnet, dass** das Mobilfunkgerät (22) und der Empfänger (100) in einem gemeinsamen Gehäuse angeordnet sind.

4. Empfänger (100) nach einem der vorhergehenden Ansprüche, **dadurch gekennzeichnet, dass** eine Steuereinheit (20), insbesondere in Form eines Prozessors, vorgesehen ist, welche den Signaldekoder (12) und weitere vorbestimmte Komponenten (26, 28) des Empfängers (100) über einen Steuerbus (32) angesteuert, wobei eine Kommunikationsverbindung, insbesondere eine Draht- oder Infrarotschnittstelle, zwischen der Steuereinheit (20) und dem externen Übertragungsweg (22) vorgesehen ist, wobei die Steuereinheit (20) das Authentisierungssignal an den Signaldekoder (12) überträgt, wenn die Steuereinheit (20) das Authentisierungssignal von dem externen Übertragungsweg (22) erhält.

5. Empfänger (100) nach einem der vorhergehenden Ansprüche, **dadurch gekennzeichnet, dass** eine mit der Steuereinheit (20) verbundene Aus- und Eingabeeinrichtung (24) vorgesehen ist.

6. Empfänger (100) nach einem der vorhergehenden Ansprüche, **dadurch gekennzeichnet, dass** ein Empfangsteil (10), welches aus dem Rundfunksignal ein Basisbandsignal demoduliert, und eine nachgeschaltete Audiosignalverarbeitungseinheit (14) vorgesehen ist, wobei der Signaldekoder (12) in einem Signalweg zwischen dem Empfangsteil (10) und der Audiosignalverarbeitungseinheit (14) angeordnet ist.

7. Empfänger (100) nach einem der vorhergehenden Ansprüche, **dadurch gekennzeichnet, dass** der Signaldekoder (12) einen Multiplexer (30), einen ersten durchgeschleiften Signalweg (36), auf dem keine Entschlüsselung erfolgt, und einen zweiten Signalweg (38) mit einem Audiodekoder (26) aufweist, wobei der erste und zweite Signalweg (36, 38) mit dem vom Audiodekoder (26) gesteuerten Multiplexer (30) verbunden sind.

8. Empfänger (100) nach Anspruch 6 und 7, **dadurch gekennzeichnet, dass** ein Ausgang des Multiplexers (30) mit der Audiosignalverarbeitungseinheit (14) verbunden ist.

9. Empfänger (100) nach einem der vorhergehenden Ansprüche, **dadurch gekennzeichnet, dass** der Signaldekoder (12) einen dritten Signalweg (40) mit einem Datendekoder (28) aufweist.

10. Empfänger (100) nach Anspruch 4 und 9, **dadurch gekennzeichnet, dass** ein Ausgang (34) des Datendekoders (28) mit der Steuereinheit (20) verbunden ist.

11. Verfahren zum Empfang eines Rundfunksignals, wobei ein in dem Rundfunksignal verschlüsselt enthaltenes Audiosignal und/oder ein in dem Rundfunksignal verschlüsselt enthaltenes Datensignal entschlüsselt wird, wenn ein externes Authentisierungssignal über einen vom Übertragungsweg des Rundfunksignals verschiedenen, externen Übertragungsweg empfangen wird, **dadurch gekennzeichnet, dass** ein Empfänger für den Übertragungsweg des Rundfunksignals oder einzelne seiner Komponenten über den externen Übertragungsweg gesteuert wird oder werden.

12. Verfahren nach Anspruch 11, **dadurch gekennzeichnet, dass** das Authentisierungssignal über ein Mobilfunknetz von einem mit dem Empfänger über eine Kommunikationsschnittstelle, insbesondere über eine Draht-, Funk- oder Infrarotschnittstelle, verbundenes Mobilfunkgerät übertragen wird.

## Claims

1. Receiver (100) for a broadcast radio signal, having a signal decoder (12) which decrypts an audio signal contained in encrypted form in the broadcast radio signal and/or a data signal contained in encrypted form in the broadcast radio signal, where the signal decoder (12) is in a form such that the encrypted signal is decrypted only if the signal decoder (12) receives an external authentication signal received via an external transmission path which is different from a transmission path for the broadcast radio signal, **characterized in that** the receiver (100) or individual instances of its components is or are additionally able to be controlled by means of a control signal which can be transmitted via the external transmission path.

2. Receiver (100) according to Claim 1, **characterized in that** the external transmission path comprises a mobile radio (22), particularly based on the GSM/UMTS standard, which is connected to the receiver (100) via a communication link, particularly via a wired, radio or infrared interface, where the mobile radio (22) receives the authentication signal and forwards it to the receiver (100) via the communication link.

3. Receiver (100) according to Claim 2, **characterized in that** the mobile radio (22), and the receiver (100) are arranged in a common housing.

4. Receiver (100) according to one of the preceding claims, **characterized in that** a control unit (20), particularly in the form of a processor, is provided which actuates the signal decoder (12) and further predetermined components (26, 28) of the receiver (100) via a control bus (32), where a communication link, particularly a wired or infrared interface, is provided between the control unit (20) and the external transmission path (22), the control unit (20) transmitting the authentication signal to the signal decoder (12) if the control unit (20) receives the authentication signal from the external transmission path (22).

5. Receiver (100) according to one of the preceding claims, **characterized in that** an output and input device (24) connected to the control unit (20) is provided.

6. Receiver (100) according to one of the preceding claims, **characterized in that** a reception part (10), which demodulates a baseband signal from the broadcast radio signal, and a downstream audio signal processing unit (14) are provided, the signal decoder (12) being arranged in a signal path between the reception part (10) and the audio signal processing unit (14).

7. Receiver (100) according to one of the preceding claims, **characterized in that** the signal decoder (12) has a multiplexer (30), a first looped signal path (36) on which no decryption takes place, and a second signal path (38) with an audio decoder (26), the first and second signal paths (36, 38) being connected to the multiplexer (30) controlled by the audio decoder (26).

8. Receiver (100) according to Claims 6 and 7, **characterized in that** an output of the multiplexer (30) is connected to the audio signal processing unit (14).

9. Receiver (100) according to one of the preceding claims, **characterized in that** the signal decoder (12) has a third signal path (40) with a data decoder (28).

10. Receiver (100) according to claims 4 and 9,
**characterized in that** an output (34) of the data decoder (28) is connected to the control unit (20).

11. Method for a receiving a broadcast radio signal, where an audio signal contained in encrypted form in the broadcast radio signal and/or a data signal contained in encrypted form in the broadcast radio signal are decrypted when an external authentication signal is received via an external transmission path which is different from the transmission path for the broadcast radio signal, **characterized in that** a receiver for the transmission path of the broadcast radio signal or individual instances of its components is or are controlled via the external transmission path.

12. Method according to claim 11, **characterized in that** the authentication signal is transmitted via a mobile radio network by a mobile radio connected to the receiver via a communication interface, particularly via a wired, radio or infrared interface.

## Revendications

1. Récepteur (100) pour un signal radio, avec un décodeur de signal (12) qui décode un signal audio contenu sous forme codée dans le signal radio et/ou un signal de données contenu sous forme codée dans le signal radio, le décodeur de signal (12) étant conçu pour n'effectuer un décodage du signal qu'après avoir reçu un signal d'authentification externe reçu par une voie de transmission externe différente d'une voie de transmission du signal radio
**caractérisé en ce que**
le récepteur (100) ou quelques-uns de ses composants peut ou peuvent être commandés en plus au moyen d'un signal de commande transmis par la voie de transmission externe.

2. Récepteur (100) selon la revendication 1,
**caractérisé en ce que**
la voie de transmission externe comprend un appareil de radiotéléphonie mobile (22), notamment selon la norme GSM/UMTS, relié au récepteur (100) par une liaison de communication, notamment par une interface à fil, une interface radio ou une interface infrarouge, l'appareil de radiotéléphonie mobile (22) recevant le signal d'authentification pour le transmettre au récepteur (100) par la liaison de communication.

3. Récepteur (100) selon la revendication 2,
**caractérisé en ce que**
l'appareil de radiotéléphonie mobile (22) et le récepteur (100) sont dans un boîtier commun.

4. Récepteur (100) selon l'une quelconque des revendications précédentes,
**caractérisé en ce qu'**
une unité de commande (20), notamment sous la forme d'un processeur, commande le décodeur de signal (12) et d'autres composants (26, 28) prédéterminés du récepteur (100) par un bus de commande (32), avec une liaison de communication, notamment une interface infrarouge ou à fil, prévue entre l'unité de commande (20) et la voie de transmission externe (22), et l'unité de commande (20) transmet le signal d'authentification au décodeur de signal (12), si l'unité de commande (20) reçoit le signal d'authentification de la voie de transmission externe (22).

5. Récepteur (100) selon l'une quelconque des revendications précédentes,
**caractérisé par**
un dispositif de sortie et d'entrée (24) relié à l'unité de commande (20).

6. Récepteur (100) selon l'une quelconque des revendications précédentes,
**caractérisé en ce qu'**
un élément de réception (10) démodule un signal de bande de base à partir du signal radio, avec une unité de traitement de signal audio (14) connectée en aval, et le décodeur de signal (12) est situé dans une voie de signaux entre l'élément de réception (10) et l'unité de traitement de signal audio (14).

7. Récepteur (100) selon l'une quelconque des revendications précédentes,
**caractérisé en ce que**
le décodeur de signal (12) présente un multiplexeur (30), une première voie de signaux (36) meulée, sur laquelle aucun décodage ne s'effectue, et une deuxième voie de signaux (38) avec un décodeur audio (26), et les première et deuxième voies de signaux (36, 38) sont reliées au multiplexeur (30) commandé par le décodeur audio (26).

8. Récepteur (100) selon la revendication 6 et 7,
**caractérisé en ce qu'**
une sortie du multiplexeur (30) est reliée à l'unité de traitement de signal audio (14).

9. Récepteur (100) selon l'une quelconque des revendications précédentes,
**caractérisé en ce que**
le décodeur de signal (12) présente une troisième voie de signal (40) avec un décodeur de données (28).

10. Récepteur (100) selon la revendication récepteur 4 et 9,
**caractérisé en ce qu'**
une sortie (34) du décodeur de données (28) est reliée à l'unité de commande (20).

11. Procédé permettant la réception d'un signal radio, selon lequel on décode un signal audio contenu sous forme codée dans le signal radio et/ou un signal de données contenu sous forme codée dans le signal radio, si un signal d'authentification externe est reçu par une voie de transmission externe, différente de la voie de transmission du signal radio,
**caractérisé en ce qu'**
un récepteur pour la voie de transmission du signal radio ou quelques-uns de ses composants ou sont commandés par la voie de transmission externe.

12. Procédé selon la revendication 11,
**caractérisé en ce que**
le signal d'authentification est transmis par un réseau de radiotéléphonie mobile d'un appareil de radiotéléphonie mobile relié au récepteur par une interface de communication, notamment par une interface infrarouge, une interface à fil ou une interface radio.
